# EUROPEAN PATENT SPECIFICATION

(11) **EP 4 055 442 B1**
(45) Date of publication and mention of the grant of the patent: **24.06.2026**
(21) Application number: 20885993.4
(22) Date of filing: 04.11.2020
(51) Int. Cl.: G02F 1/167, G02F 1/16755, G02F 1/16757, G02F 1/1676

(54) **THREE-DIMENSIONAL, COLOR-CHANGING OBJECTS INCLUDING A LIGHT-TRANSMISSIVE SUBSTRATE AND AN ELECTROPHORETIC MEDIUM**
DREIDIMENSIONALE FARBVERÄNDERNDE OBJEKTE MIT EINEM LICHTDURCHLÄSSIGEN SUBSTRAT UND EINEM ELEKTROPHORETISCHEN MEDIUM
OBJETS TRIDIMENSIONNELS CHANGEANT DE COULEUR COMPRENANT UN SUBSTRAT TRANSMETTANT LA LUMIÈRE ET UN MILIEU ÉLECTROPHORÉTIQUE

(30) Priority: 04.11.2019 US 201962930545 P
(43) Date of publication of application: 14.09.2022
(73) Proprietor: E Ink Corporation, Billerica, MA 01821-4165 (US)
(72) Inventor: BULL, Stephen, Massachusetts 01821-4165 (US)
(74) Representative: Kilburn & Strode LLP
(86) International application number: PCT/US2020/058778
(87) International publication number: WO 2021/091936

(56) References cited:
- EP-A2- 3 498 452
- EP-A2- 3 498 452
- WO-A2-2004/049045
- JP-A- 2001 272 702
- JP-A- 2012 063 630
- KR-A- 20190 053 173
- US-A1- 2008 261 159
- US-A1- 2011 286 078
- US-A1- 2011 286 078

## Description

### RELATED APPLICATIONS

This application claims priority to U.S. Provisional Patent Application No. 62/930,545, filed November 4, 2020.

### BACKGROUND OF INVENTION

This invention relates to electro-optic displays and processes for the production thereof. More specifically, this invention relates to processes for the production of electro-optic displays without the use of front plane laminates, inverted front plane laminates and double release films as described in U.S. Patents Nos. 6,982,178; 7,561,324; and 7,839,564, and to processes for depositing encapsulated electrophoretic media by spraying.

An encapsulated electrophoretic display typically does not suffer from the clustering and settling failure mode of traditional electrophoretic devices and provides further advantages, such as the ability to print or coat the display on a wide variety of flexible and rigid substrates. (Use of the word "printing" is intended to include all forms of printing and coating, including, but without limitation: pre-metered coatings such as patch die coating, slot or extrusion coating, slide or cascade coating, curtain coating; roll coating such as knife over roll coating, forward and reverse roll coating; gravure coating; dip coating; spray coating; meniscus coating; spin coating; brush coating; air knife coating; silk screen printing processes; electrostatic printing processes; thermal printing processes; ink jet printing processes; electrophoretic deposition (See U.S. Patent No. 7,339,715); and other similar techniques.) Thus, the resulting display can be flexible. Further, because the display medium can be printed (using a variety of methods); the display itself can be made inexpensively.

The electrophoretic media typically comprise electrophoretic particles, charge control agents, image stability agents and flocculants in a non-polar liquid, typically encapsulated in a flexible organic matrix such as a gelatin/acacia coacervate. To produce commercial displays, it is necessary to coat a thin layer (preferably a monolayer - see U.S. Patent No. 6,839,158) of capsules on a substrate, which may be a front substrate bearing an electrode (see the aforementioned U.S. Patent No. 6,982,178), a backplane or a release sheet. Hitherto, coating of encapsulated electrophoretic media on substrates has typically been effected by slot coating, in which a slurry of capsules in a carrier medium is forced through a slot on to a substrate that is moving relative to the slot. Slot coating imposes limitations upon the viscosity and other physical properties of the material being coated and typically requires the addition of slot coating additives to control the rheology of the coated material to ensure that the coating does not flow and develop non-uniformities in thickness prior to drying. Thus, in slot coating electrophoretic capsules are typically supplied in the form of aqueous slurries containing optional latex binder, rheology modification agents, ionic dopants, and surfactants. These additives remain in the final dried electrophoretic medium and may affect its properties, including its electro-optic properties.

Furthermore, although slot coating is well adapted for applying electrophoretic media to continuous webs, it is not well adapted for coating irregularly-shaped objects. That is, slot coating is generally not useful for non-planar substrates, which is unfortunate because encapsulated electrophoretic media are well adapted for providing color-changing capacity to three-dimensional objects.

WO 2004/049045 A2 describes a backplane, for use in an electro-optic display, comprising a patterned metal foil having a plurality of apertures extending therethrough, coated on at least side with an insulating polymeric material, and a plurality of thin film electronic devices provided on the insulating polymeric material.

US 2011/286078 A1 describes a system for displaying images including a display device having a pixel unit array.

JP 2001 272702 A describes a method for manufacturing a display device.

### SUMMARY OF INVENTION

As described herein, the invention provides a method for making color-changing objects of many different shapes, for example, sub-assemblies of larger objects that are put together to create commonly encountered objects, such as toys, appliances, and electronics. Such shapes are generally termed "three-dimensional" for the purposes of understanding the invention. "Three- dimensional," as used herein, is intended to exclude substantially-planar objects similar to front plane laminates, display modules, and slightly bent objects, such as a foldable displays. Although not intended to be limiting, one definition of "three-dimensional" may be having curvature in more than two perpendicular directions, for example a bowl, a cylinder, a pyramid, a sphere, a cone, a helix, an ellipsoid, a hemi-ellipsoid, etc. In this document, "non-planar" may be used interchangeably with "three-dimensional."

In a first aspect, the invention provides a color-changing object according to appended claim 1, comprising a light-transmissive (three-dimensional) non-planar substrate, a light-transmissive front conductor, a layer of encapsulated electrophoretic media, and a back conductor. In some embodiments, the color changing object additionally includes one or more adhesive layers to facilitate construction of the object. The light-transmissive non-planar substrate can be constructed from a clear material, generally, however, the more likely choices are light-transmissive polymers
such as polyethylene terephthalate (PET), polycarbonate, polypropylene, acrylic, or cyclic olefin copolymer (COC). The light-transmissive conductor may be a separate layer or it may be integrated into the light-transmissive non-planar substrate. The light-transmissive front conductor may be constructed with metal flakes, metal screen, conductive polymers, carbon nanotubes or a combination thereof.

In a second aspect, the invention provides a method of making a color-changing object according to appended claim 10, comprising providing a light-transmissive non-planar substrate, disposing a light-transmissive conductive material adjacent the inside surface of the light-transmissive non-planar substrate, thereby making the outside surface of the light-transmissive non-planar substrate the viewing surface, disposing a layer of encapsulated electrophoretic media adjacent the light-transmissive conductive material, and disposing a back conductor adjacent the layer of encapsulated electrophoretic media. Further embodiments may include providing a voltage source and coupling the light-transmissive conductive material and the back conductor to the voltage source. The light-transmissive non-planar substrate is thermoformed, cast, injection molded, or blow-molded. The process of disposing light-transmissive conductive material comprises spray coating, sputtering, atomic layer deposition, vapor deposition, or dip coating. The process of disposing a layer of encapsulated electrophoretic media adjacent the light-transmissive conductive material may include spray-coating, dip coating, electrodeposition, powder coating, silk screening, or brush-painting.

Spray-coating the encapsulated electrophoretic medium may include forming a dispersion of capsules in a liquid, feeding the dispersion through a first orifice, and feeding a continuous stream of gas through a second, annular orifice surrounding the first orifice, thereby forming a spray of the capsules. The spray-coating process may include shaping the spray by feeding a continuous stream of gas through a plurality of shaping orifices disposed adjacent the spray. If, as is typically the case, the capsule walls are formed from a hydrophilic material (such as the aforementioned gelatin/acacia coacervate), the liquid used to disperse the capsules is desirably aqueous; depending upon the specific capsules and liquid used, the liquid may optionally comprise any one or more of pH modifiers, surfactants and ionic dopants. The gas passed through both the second orifice and the shaping orifices is typically air, but it some cases it may be useful to use an inert gas, for example nitrogen.

In spray-coating embodiments, the process may include the use of a masking material covering part of the substrate so that, after removal of the masking material, capsules remain only on those portions of the substrate where the masking material was not present.
Such a technique may facilitate making an electrical connection between the light-transmissive conductive material and the back conductor.

### BRIEF DESCRIPTION OF DRAWINGS

Fig. 1 shows a cross-sectional view of an embodiment of an electrophoretic display of the invention including a light-transmissive non-planar substrate including a light-transmissive conductor that is coupled to a voltage source. The voltage source is also coupled to a back conductor. A layer of encapsulated electrophoretic media is disposed between the light-transmissive conductor and the back conductor. One or more adhesive layers may also be present.
Fig. 2 illustrates that a variety of common objects can be made to be color-changing by molding a light-transmissive substrate and adding a front conductor, a layer of electrophoretic media, and a back conductor.
Fig. 3A illustrates a process for making a color-changing non-planar display of the invention.
Fig. 3B illustrates a process for making a color-changing non-planar display of the invention.
Fig. 4 illustrates an embodiment of a nozzle suitable for spray-coating encapsulated electrophoretic media.
Fig. 5 shows the preferred range of operation of a spray-coating embodiment of the invention.

### DETAILED DESCRIPTION

The invention includes, *inter alia,* a method for making a non-planar electrophoretic display including a light-transmissive front substrate that functions as a viewing surface. A light-transmissive conductive layer is incorporated into, or adhered to, the light-transmissive front substrate, whereupon a layer of electrophoretic encapsulated media is attached thereto. After the electrophoretic medium is deposited, a back electrode is attached or deposited. When a voltage is provided between the light-transmissive conductive layer and the back electrode, the image state of the electrophoretic medium is switched, thereby creating a color-changing surface. Such a color-changing surface can be incorporated into, e.g., a toy, an appliance, an electronic device, or other suitable structure.

Some electro-optic materials are solid in the sense that the materials have solid external surfaces, although the materials may, and often do, have internal liquid- or gas-filled spaces. Such displays using solid electro-optic materials may hereinafter for convenience be referred to as "solid electro-optic displays". Thus, the term "solid electro-optic displays" includes rotating bichromal member displays, encapsulated electrophoretic displays, microcell electrophoretic displays and encapsulated liquid crystal displays.

The terms "bistable" and "bistability" are used herein in their conventional meaning in the art to refer to displays comprising display elements having first and second display states differing in at least one optical property, and such that after any given element has been driven, by means of an addressing pulse of finite duration, to assume either its first or second display state, after the addressing pulse has terminated, that state will persist for at least several times, for example at least four times, the minimum duration of the addressing pulse required to change the state of the display element. It is shown in U.S. Patent No. 7,170,670 that some particle-based electrophoretic displays capable of gray scale are stable not only in their extreme black and white states but also in their intermediate gray states, and the same is true of some other types of electro-optic displays. This type of display is properly called "multi-stable" rather than bistable, although for convenience the term "bistable" may be used herein to cover both bistable and multi-stable displays.

One type of electro-optic display, which has been the subject of intense research and development for a number of years, is the particle-based electrophoretic display, in which a plurality of charged particles move through a fluid under the influence of an electric field. Electrophoretic displays can have attributes of good brightness and contrast, wide viewing angles, state bistability, and low power consumption when compared with liquid crystal displays. Nevertheless, problems with the long-term image quality of these displays have prevented their widespread usage. For example, particles that make up electrophoretic displays tend to settle, resulting in inadequate service-life for these displays.

Numerous patents and applications assigned to or in the names of the Massachusetts Institute of Technology (MIT) and E Ink Corporation describe various technologies used in encapsulated electrophoretic and other electro-optic media. Such encapsulated media comprise numerous small capsules, each of which itself comprises an internal phase containing electrophoretically-mobile particles in a fluid medium, and a capsule wall surrounding the internal phase. Typically, the capsules are themselves held within a polymeric binder to form a coherent layer positioned between two electrodes. The technologies described in these patents and applications include:
(a) Electrophoretic particles, fluids and fluid additives; see for example U.S. Patents Nos. 7,002,728; and 7,679,814;
(b) Capsules, binders and encapsulation processes; see for example U.S. Patents Nos. 6,922,276; and 7,411,719;
(c) Films and sub-assemblies containing electro-optic materials; see for example U.S. Patents Nos. 6,825,829; 6,982,178; 7,236,292; 7,443,571; 7,513,813; 7,561,324; 7,636,191; 7,649,666; 7,728,811; 7,729,039; 7,791,782; 7,839,564; 7,843,621; 7,843,624; 8,034,209; 8,068,272; 8,077,381; 8,177,942; 8,390,301; 8,482,852; 8,786,929; 8,830,553; 8,854,721; and 9,075,280; and U.S. Patent Applications Publication Nos. 2009/0109519; 2009/0168067; 2011/0164301; 2014/0027044; 2014/0115884; and 2014/0340738;
(d) Backplanes, adhesive layers and other auxiliary layers and methods used in displays; see for example U.S. Patents Nos. D485,294; 6,124,851; 6,130,773; 6,177,921; 6,232,950; 6,252,564; 6,312,304; 6,312,971; 6,376,828; 6,392,786; 6,413,790; 6,422,687; 6,445,374; 6,480,182; 6,498,114; 6,506,438; 6,518,949; 6,521,489; 6,535,197; 6,545,291; 6,639,578; 6,657,772; 6,664,944; 6,680,725; 6,683,333; 6,724,519; 6,750,473; 6,816,147; 6,819,471; 6,825,068; 6,831,769; 6,842,167; 6,842,279; 6,842,657; 6,865,010; 6,967,640; 6,980,196; 7,012,735; 7,030,412; 7,075,703; 7,106,296; 7,110,163; 7,116,318; 7,148,128; 7,167,155; 7,173,752; 7,176,880; 7,190,008; 7,206,119; 7,223,672; 7,230,751; 7,256,766; 7,259,744; 7,280,094; 7,327,511; 7,349,148; 7,352,353; 7,365,394; 7,365,733; 7,382,363; 7,388,572; 7,442,587; 7,492,497; 7,535,624; 7,551,346; 7,554,712; 7,583,427; 7,598,173; 7,605,799; 7,636,191; 7,649,674; 7,667,886; 7,672,040; 7,688,497; 7,733,335; 7,785,988; 7,843,626; 7,859,637; 7,893,435; 7,898,717; 7,957,053; 7,986,450; 8,009,344; 8,027,081; 8,049,947; 8,077,141; 8,089,453; 8,208,193; 8,373,211; 8,389,381; 8,498,042; 8,610,988; 8,728,266; 8,754,859; 8,830,560; 8,891,155; 8,989,886; 9,152,003; and 9,152,004; and U.S. Patent Applications Publication Nos. 2002/0060321; 2004/0105036; 2005/0122306; 2005/0122563; 2007/0052757; 2007/0097489; 2007/0109219; 2009/0122389; 2009/0315044; 2011/0026101; 2011/0140744; 2011/0187683; 2011/0187689; 2011/0292319; 2013/0278900; 2014/0078024; 2014/0139501; 2014/0300837; 2015/0171112; 2015/0205178; 2015/0226986; 2015/0227018; 2015/0228666; and 2015/0261057; and International Application Publication No. WO 00/38000; European Patents Nos. 1,099,207 B1 and 1,145,072 B1;
(e) Color formation and color adjustment; see for example U.S. Patents Nos. 7,075,502; and 7,839,564;
(f) Methods for driving displays; see for example U.S. Patents Nos. 7,012,600; and 7,453,445;
(g) Applications of displays; see for example U.S. Patents Nos. 7,312,784; and 8,009,348; and
(h) Non-electrophoretic displays, as described in U.S. Patents Nos. 6,241,921; 6,950,220; 7,420,549; 8,319,759; and 8,994,705; and U.S. Patent Application Publication No. 2012/0293858.

Many of the aforementioned patents and applications recognize that the walls surrounding the discrete microcapsules in an encapsulated electrophoretic medium could be replaced by a continuous phase, thus producing a so-called polymer-dispersed electrophoretic display, in which the electrophoretic medium comprises a plurality of discrete droplets of an electrophoretic fluid and a continuous phase of a polymeric material, and that the discrete droplets of electrophoretic fluid within such a polymer-dispersed electrophoretic display may be regarded as capsules or microcapsules even though no discrete capsule membrane is associated with each individual droplet; see for example, the aforementioned U.S. Patent No. 6,866,760. Accordingly, for purposes of the present application, such polymer-dispersed electrophoretic media are regarded as sub-species of encapsulated electrophoretic media.

Although electrophoretic media are often opaque (since, for example, in many electrophoretic media, the particles substantially block transmission of visible light through the display) and operate in a reflective mode, many electrophoretic displays can be made to operate in a so-called "shutter mode" in which one display state is substantially opaque and one is light-transmissive. See, for example, U.S. Patents Nos. 5,872,552; 6,130,774; 6,144,361; 6,172,798; 6,271,823; 6,225,971; and 6,184,856. Dielectrophoretic displays, which are similar to electrophoretic displays but rely upon variations in electric field strength, can operate in a similar mode; see U.S. Patent No. 4,418,346. Other types of electro-optic displays may also be capable of operating in shutter mode. Electro-optic media operating in shutter mode may be useful in multi-layer structures for full color displays; in such structures, at least one layer adjacent the viewing surface of the display operates in shutter mode to expose or conceal a second layer more distant from the viewing surface.

The term "light-transmissive" is used in this patent and herein to mean that the layer thus designated transmits sufficient light to enable an observer, looking through that layer, to observe the change in display states of the electro-optic medium, which will normally be viewed through the electrically-conductive layer and adjacent substrate (if present); in cases where the electro-optic medium displays a change in reflectivity at non-visible wavelengths, the term "light-transmissive" should of course be interpreted to refer to transmission of the relevant non-visible wavelengths. The substrate will typically be a polymeric film, and will normally have a thickness in the range of about 1 to about 25 mil (25 to 634 µm), preferably about 2 to about 10 mil (51 to 254 µm). The light-transmissive conductive material may be, for example, a thin metal or metal oxide layer of, for example, aluminum or ITO, or may be a conductive polymer. Poly(ethylene terephthalate) (PET) films coated with aluminum or ITO are available commercially, for example as "aluminized Mylar" ("Mylar" is a Registered Trade Mark) from E.I. du Pont de Nemours & Company, Wilmington DE, and such commercial materials may be used with good results in the front plane laminate. The light-transmissive conductive material may also include metal flakes, metal screen, conductive polymers, carbon nanotubes, graphene, or a combination thereof.

In an electrophoretic display, there are often one or more adhesive layers in the stack of layers. For example, there may be an adhesive layer between the electrophoretic layer and an electrode, and this layer of adhesive remains in the final display. Of course, this adhesive layer has significant effects on the electro-optic properties of the display. Inevitably, some of the voltage drop between the electrodes occurs within the adhesive layer, thus reducing the voltage available for driving the electrophoretic layer. The effect of the adhesive tends to become greater at lower temperatures, and this variation in the effect of adhesive with temperature complicates the driving of the display. The voltage drop within the adhesive can be reduced, and the low temperature operation of the display improved, by increasing the conductivity of the adhesive layer, for example by doping the layer with tetrabutylammonium hexafluorophosphate or other materials as described in U.S. Patents Nos. 7,012,735 and 7,173,752.

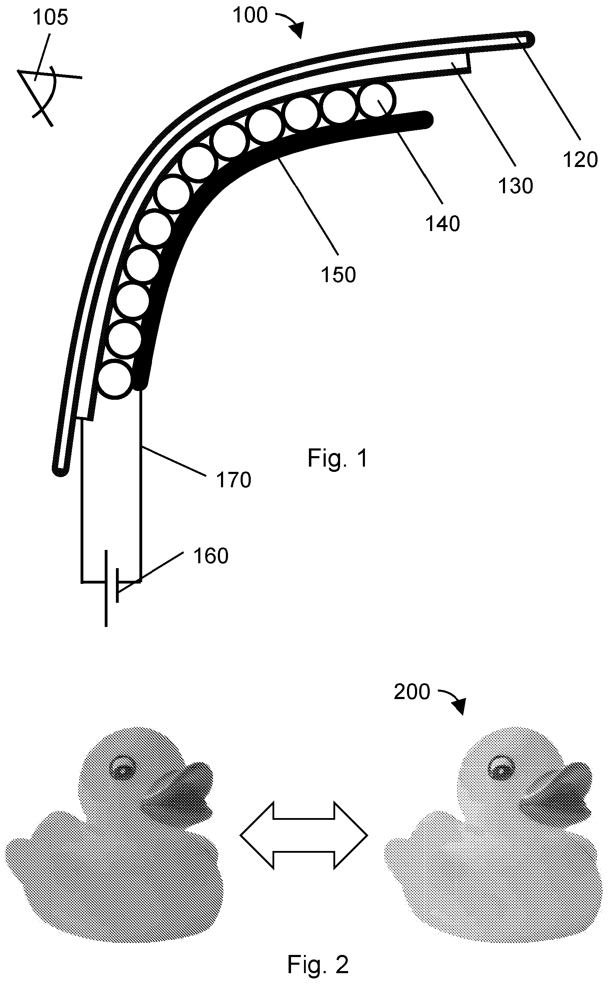

A cross section of an exemplary color-changing object 100 can be seen in Fig. 1, wherein the viewing surface is opposed to the viewer 105. The color-changing object 100 is built up from a light-transmissive non-planar substrate 120, and then a light-transmissive front conductor 130 is added as a separate layer or integrated into the light-transmissive non-planar substrate 120. After the light-transmissive non-planar substrate 120 and light-transmissive front conductor 130 are integrated, a layer of encapsulated electrophoretic media 140 is disposed upon the integrated layers 120 and 130. Finally, a back conductor 150 is disposed on the layer of encapsulated electrophoretic media 140, thereby completing the color-changing object 100. After completion, the light-transmissive front conductor 130 and the back conductor 150 are connected to a voltage source 160 with an electrical connector 170 (e.g., a wire or a trace). When a voltage is applied between the light-transmissive front conductor 130 and the back conductor 150 electrophoretic particles in the encapsulated electrophoretic medium will move toward (or away from) the viewer 105, thereby producing the effect of a color change in the color-changing object 100. The voltage source 160 may be, for example, a D.C. voltage source, and it may be configured to provide one, two, three, four, five, six, seven, eight, or nine voltage levels. In some embodiments, the voltage source 160 will provide a time varying voltage signal that may look like square waves in a voltage vs. time profile. The time varying voltage may be ramped, saw-toothed, or sinusoidal The voltage source 160 may supply a continuum of voltage levels and time dependencies, allowing unique application of voltage signals. In some embodiment, multiple voltage sources 160 may be coupled between the front conductor 130 and the back conductor 150.

The layer of encapsulated electrophoretic medium may comprise more than one type of charged pigment particles, e.g., as described in the patent above. Accordingly, the color-changing object 100 may alternate between, for example, white and black. Alternatively, the layer of encapsulated electrophoretic media 140 may comprise three particles wherein the first set of charged pigment particles is red, the second set of charged pigment particles is green, and the third set of charged pigment particles is blue. Alternatively, the layer of encapsulated electrophoretic media 140 may comprise three particles wherein the first set of charged pigment particles is red, the second set of charged pigment particles is black, and the third set of charged pigment particles is white. Alternatively, the layer of encapsulated electrophoretic media 140 may comprise four particles wherein the first set of charged pigment particles is white, the second set of charged pigment particles is cyan, the third set of charged pigment particles is yellow, and the fourth set of charged pigment particles is magenta. Some sets of the charged pigment particles may be primarily light-scattering (e.g., reflective), while other sets may be subtractive (e.g., absorptive), while other sets may be light-transmissive. Alternatively, the layer of encapsulated electrophoretic media 140 may comprise four particles wherein the first set of charged pigment particles is red, the second set of charged pigment particles is green, the third set of charged pigment particles is blue, and the fourth set of charged pigment particles is black. Alternatively, the layer of encapsulated electrophoretic media 140 may comprise four particles wherein the first set of charged pigment particles is red, the second set of charged pigment particles is yellow, the third set of charged pigment particles is blue, and the fourth set of charged pigment particles is black. Alternatively, the layer of encapsulated electrophoretic media 140 may comprise five sets of charged particles wherein the first set of charged pigment particles is red, the second set of charged pigment particles is yellow, the third set of charged pigment particles is blue, the fourth set of charged pigment particles is black, and the fifth set of charged pigment particles is white.

It is to be understood that the color-changing object 100 need not be rigid, and can be flexible to the degree that bending does not cause rupture of the capsules within the layer of encapsulate electrophoretic media or cause the connections in the light-transmissive front conductor 130 or the back conductor 150 to fail. For example, the light-transmissive non-planar substrate 120 may comprise a clear polymer, such as polyethylene terephthalate (PET), polycarbonate, polypropylene, acrylic, or cyclic olefin copolymer (COC). It is appropriate for the light-transmissive non-planar substrate 120 to be only partially light-transmissive, e.g., translucent and/or tinted. Such a light-transmissive non-planar substrate 120 may give rise to a color-changing toy 200, such as shown in Fig. 2. Because the electrophoretic medium only requires a small amount of power, and because the electrophoretic states are bistable, it is possible to achieve such color-change features with a small energy source (e.g., a disposable battery) that is hidden within the color-changing object 100.

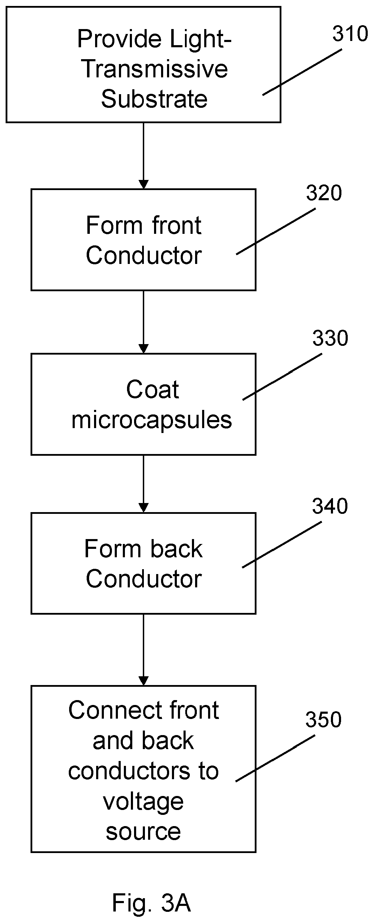

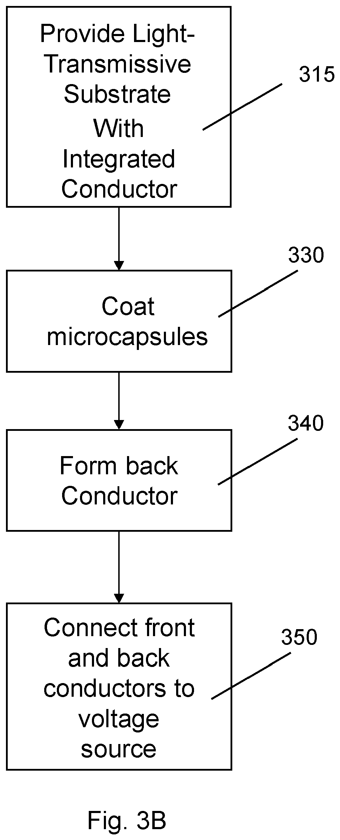

A method of making a color-changing object 100 is described with respect to the flow chart in Fig. 3A. Beginning with step 310 a light-transmissive non-planar substrate is provided. As discussed above, the light-transmissive non-planar substrate may comprise a clear polymer; however, other light-transmissive materials, such as glass, are also suitable. The light-transmissive non-planar substrate may be shaped before the process begins with a process such as thermoforming, casting, injection molding, blow-molding, grinding, etching, or cutting. After the light-transmissive substrate is provided in step 310, a front (light-transmissive) conductor is coupled to or integrated into the light-transmissive substrate at step 320. In some embodiments, the front (light-transmissive) conductor may include an additional light-transmissive substrate, such as a PET film. As shown in FIG. 3B, in the instance that the front conductor material is integrated into the light-transmissive non-planar substrate 315, it is possible for the combination of the light-transmissive non-planar substrate and the front conductor to be shaped together, e.g., with thermoforming, blow molding, etc. Typically, the front (light-transmissive) conductor material comprises metal flakes, metal screen, conductive polymers, carbon nanotubes, graphene or a combination thereof. The front (light-transmissive) conductor material may be formed from a conductive polymer, for example poly(3,4-ethylenedioxythiophene) ("PEDOT"), normally used in the form of its poly(styrenesulfonate) salt ("PEDOT:PSS") or a polyaniline, or may be formed from network of conductors, for example carbon nanotubes or nanowires. If the front (light-transmissive) conductor material is not integrated into the light-transmissive non-planar substrate, it may be separately added to the light-transmissive non-planar substrate using a process such as spray coating, sputtering, atomic layer deposition, vapor deposition, painting, or dip coating.

Once the light-transmissive non-planar substrate and the front conductor have been integrated, the resulting structure is coated with a layer of an encapsulated electrophoretic medium in step 330. This step may be accomplished using a process such as spray coating, dip coating, electrodeposition, powder coating, silk screening, or brush-painting. The encapsulated electrophoretic medium may be delivered as a slurry of capsules and a polyurethane binder, or the encapsulated electrophoretic medium may be delivered "freeze dried", i.e., after lyophilization. In order to provide a voltage across the electrophoretic medium to actuate the optical states, a back conductor is next formed on the layer of encapsulated electrophoretic media in step 340. The back conductor need not be light-transmissive; however, it may be light-transmissive. The back conductor may comprise, for example, metal flakes, metal screen, metal foil, metal paint, conductive polymers, carbon nanotubes, graphene, graphite or a combination thereof. Finally, once the front and back conductors are present, they may be connected to a voltage source in step 350. In some instances, it is useful to mask off a portion of the front conductor with, e.g., masking tape, prior to coating the non-planar object with the encapsulated medium and the back conductor. Accordingly, once the mask is removed, clear access to the front conductor is provided to allow easy coupling of the front and back conductors to the voltage source. Alternatively, a masking layer may be formed from a simple polymeric film that adheres to the backplane either because of its own physical properties or with the aid of an adhesive coating, but should desirably not be more than about 75 µm in thickness. Polymeric films that have been found useful as masking layers include Kapton tape (a polyimide tape available from du Pont de Nemours & Company, Wilmington, DE) and RP301 film (an acrylic film available form Nitto America, Inc., Fremont CA). The solid electro-optic layer is typically an encapsulated electrophoretic layer but may also be a polymer-dispersed electrophoretic layer or a rotating bichromal member or electrochromic layer. The material used to form the front electrode and the adhesive can be any of the materials used in the prior art for this purpose.

For both the front (light-transmissive) conductor and the back conductor, an electrically conductive layer is disposed above and below, respectively, of the layer of encapsulated electrophoretic media. As discussed for example in the aforementioned U.S. Patent No. 6,982,178, polymeric films coated with indium tin oxide (ITO) are available commercially and are suitable for providing the front and the rear conductors. In some embodiments, an adhesive layer (not shown in figures) can be applied, e.g., between the light-transmissive non-planar substrate and the front (light-transmissive) conductor, or between the front (light-transmissive) conductor and the layer of encapsulated electrophoretic media, or between the layer of encapsulate electrophoretic media and the back conductor. Such an adhesive may be cured, e.g., with heat and/or pressure, or the adhesive may be radiation-cured with ultraviolet radiation.

The front electrode layer 312 may be formed from a conductive polymer, for example poly(3,4-ethylenedioxythiophene) ("PEDOT"), normally used in the form of its poly(styrenesulfonate) salt ("PEDOT:PSS") or a polyaniline, or may be formed from network of conductors, for example carbon nanotubes or nanowires. The present inventors have successfully coated both PEDOT and carbon nanotube front electrodes directly on an encapsulated electrophoretic layer.

### Spray coating process

As already mentioned, this invention may be constructed by spraying capsules of an electrophoretic medium on to a substrate. This process comprises forming a dispersion of the capsules in a liquid; feeding the dispersion through a first orifice; and feeding a continuous stream of gas through a second, annular orifice surrounding the first orifice, thereby forming a spray of the capsules. This spray coating process has the advantage over slot coating that spray coating normally does not require the use of rheology modifiers in the liquid being sprayed, so that the final coating is free from such rheology modifiers and hence free from the effects such rheology modifiers may have upon the properties of slot coated electrophoretic media. Typically, in spray coating, only the additives actually needed in the final product need be added to the liquid being sprayed.

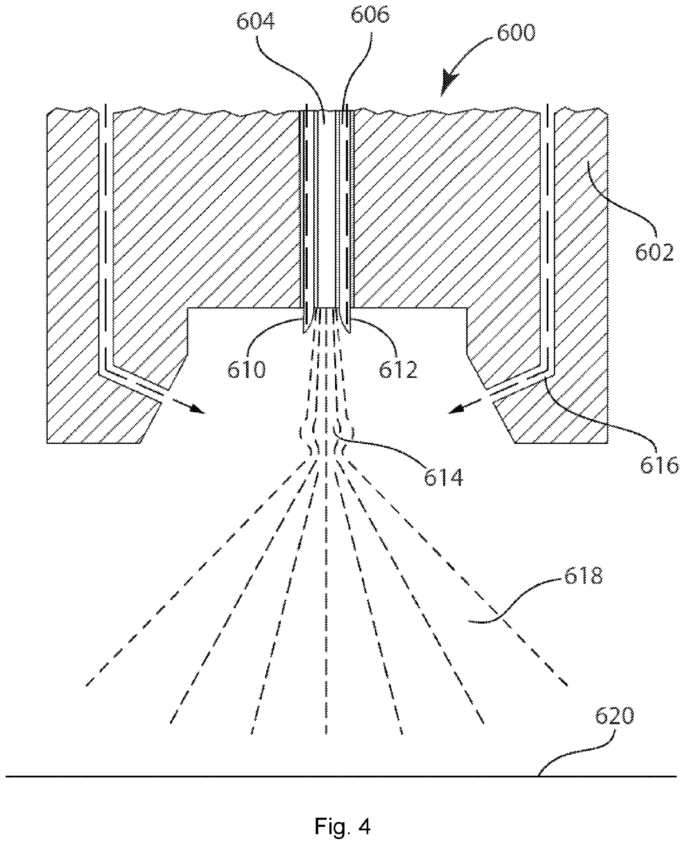

Figure 4 is a schematic cross-section through a simple spray coating nozzle (generally designated 600) that may be used in the spray coating process of the present invention. The nozzle 600 comprises a substantially cylindrical body 602 having a central, axial bore 604 through which is pumped electrophoretic capsules (not shown) dispersed in a liquid (also not shown). The central bore 604 is surrounded by an annular bore 606, through which is forced a continuous stream of air. The lower end of the central bore 604 terminates in an orifice 608, which the lower end of the annular bore 606 terminates in an annular orifice 610, which surrounds orifice 608. A cylindrical baffle 612 surrounds the annular orifice 610. The air flow through the annular orifice 610 constrained by the baffle 612 causes the dispersion of capsules passing through orifice 608 to form a spray or jet 614.

The nozzle 600 is also provided with shaping air bores 616, which may be six or eight in number. As shown in Fig. 4, the peripheral portions of the nozzle 600, through which the bores 616 pass, extend downwardly below the orifices 608 and 610 and the baffle 612, and the lower portions of the bores 616 are directly downwardly and inwardly. Shaping air is forced continuously through the bores 616 so that it impinges on the jet 614, thereby causing the jet to open out into a wide spray 618, which impinges on a substrate 620 disposed below the nozzle 600.

The quality of capsules coatings is assessed in terms of their reproducibility granularity, mean coating weight, uniformity and defect density; defect density is quantified by the number of non-switching capsules per unit display area in a standard display structure, which for present purposes is defined as a backplane bearing, in order, a 25 µm layer of lamination adhesive, a 20 µm capsule layer and a front substrate comprising an ITO layer on 25 µm polyethylene terephthalate film. Preferably, the ratio of atomization air outlet cross-section to capsule dispersion outlet cross section is not greater than about 8.5, and preferably between about 5.0 and about 7.0. The capsule dispersion orifice diameter is preferably in the range of about 1.0-1.40 mm. The capsule dispersion may contain capsules in a weight fraction preferably between about 38.0 and about 40.5 weight per cent; this dispersion may optionally contain 1-butanol at a concentration of up to about 4.0 weight per cent and a surfactant, such as Triton X-100 at a concentration of up to about 0.04 weight per cent.

A wide range of capsule dispersion feed rates and atomization air feed rates can be used in the spray coating process of the present invention. Typically, the capsule dispersion feed rate, M_{F}, is not less than about 30 g/min and not greater than about 70 g/min, the optimum being determined mainly on the basis of an appropriate residence time in the atomization zone, that is to say the region in which the capsule dispersion column emerging from the first orifice breaks into sheets of fluid, which subsequently break into ligaments and finally droplets. Desirably, the droplet size distribution is such that the mean capsule count per droplet is less than about 5.0, and the standard deviation is less than about 3.0, capsules per droplet. The atomization air feed rate is set on the basis of a critical air velocity, v*, measured at the second orifice, and is typically of the order of about 100 m/sec. In the preferred process, a total air feed rate, M_{A}, (including atomization air and shaping air) of approximately 150 to 200 g/min is employed in the absence of shaping air, and up to 300 g/min with shaping air.

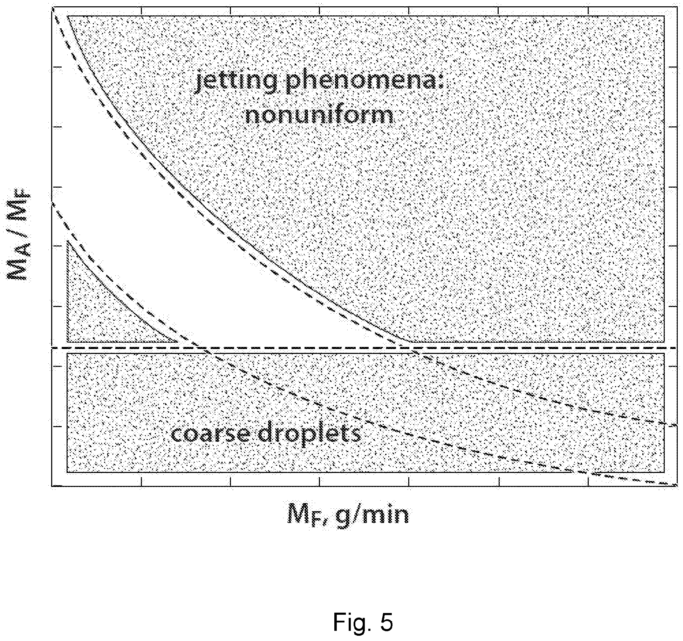

Empirically, it has been found that the operating window for HVLP atomization in terms of M_{A}/M_{F} versus M_{F}, has the form shown in Fig. 5, although the numerical values involved will vary with the particular nozzle design used. The unshaded region of the graph of Fig. 5 represents the desirable operating window. The shaded regions represent defect regions which result in undesirable spray patterns such as excessive fluid velocity ("jetting"), highly irregular and transient spray structure, and coarse droplet distribution.

In the spray coating process of the present invention, the air feed rate and nozzle-to-substrate distance should be carefully controlled to avoid capsule damage. In general, a nozzle-to-substrate distance of 200 to 320 mm is optimal, and this distance should be adjusted approximately inversely to atomization air velocity squared.

It has also been found that the quality and uniformity of the sprayed capsule coating can be strongly influenced by pretreatment of the substrate and by additives added to the capsule dispersion. Useful pretreatments and additives include but are not limited to:
1) Capsule dispersions that incorporate surfactants such as Triton X -100, butanol etc. to improve wetting of the substrate surface;
2) Pre-coating of the substrate surface with sub-layers incorporating surfactants such as Triton X-100, 1-butanol, and others possessing a detergent structure, and optionally a polyurethane latex;
3) Pre-treating the substrate with an atmospheric plasma or corona discharge treatment; and
4) The capsule dispersion may contain polymeric binders, for example a polyurethane latex

As already mentioned, the spray coating process of the invention may include the use of a masking material covering part of the substrate so that, after removal of the masking material, capsules remain only on those portions of the substrate where the masking material was not present. The masking material used to cover part of the substrate should not be porous, or at least should have low enough porosity to ensure that capsule deposition on to the masked areas of the substrate does not occur. The masking material should not significantly absorb the liquid (usually aqueous) in which the capsules are dispersed, and should be placed close enough to the surface of the substrate that lateral draft of capsules beneath the masking material from the unmasked regions of the substrate into the masked areas does not occur. After the capsules have been deposited on the substrate, the capsules may be dried (or otherwise treated to form a coherent layer, for example by exposure to radiation) with the masking material still in position, or the masking material may first be removed and then the capsules dried or otherwise treated. In either case, the physical properties of the masking material and the capsule dispersion should be chosen so that, during the removal of the masking material, capsules are not dragged into previously masked areas of the substrate, nor are capsules removed from unmasked areas (for example, by irregular tearing of a coherent dried layer of capsules.

The masking film may comprise an adhesive pre-laminated on to the surface on to which the capsules are to be deposited, and a release film exposed to the spray. After capsule deposition, the release film is removed, followed by additional processing. The resultant sprayprinted film may then be laminated to a backplane, which may be either transparent or opaque.

It will be apparent to those skilled in the art that numerous changes and modifications can be made in the specific embodiments of the invention described above without departing from the scope of the invention. Accordingly, the whole of the foregoing description is to be interpreted in an illustrative and not in a limitative sense.

## Claims

1. A color-changing object (100) comprising:
a light-transmissive non-planar substrate (120), wherein an outside surface of the substrate (120) is a viewing surface of the color-changing object (100);
a light-transmissive front conductor (130), positioned adjacent to an inside surface of the light-transmissive non-planar substrate (120) or integrated into the light-transmissive non-planar substrate (120);
a layer of encapsulated electrophoretic media (140); and
a back conductor (150);
**characterized in that**
the layer of encapsulated electrophoretic media is free from rheology modifiers.

2. The color-changing object (100) of claim 1, wherein the back conductor (150) is light transmissive.

3. The color-changing object (100) of claim 1, further comprising at least one of an adhesive layer and a back substrate.

4. The color-changing object (100) of claim 1, wherein the light-transmissive non-planar substrate (120) comprises polyethylene terephthalate (PET), polycarbonate, polypropylene, acrylic, or cyclic olefin copolymer (COC).

5. The color-changing object (100) of claim 1, wherein the light-transmissive front conductor (130) comprises metal flakes, metal screen, conductive polymers, carbon nanotubes or a combination thereof.

6. The color-changing object (100) of claim 1, wherein the light-transmissive front conductor (130) is integrated into the light-transmissive non-planar substrate (120).

7. The color-changing object (100) of claim 1, wherein the electrophoretic media (140) comprises charged pigment particles dispersed in a solvent.

8. The color-changing object (100) of claim 7, wherein the charged pigment particles include
(a) two sets of pigment particles with opposite charges;
(b) three set of pigment particles; or
(c) four sets of pigment particles.

9. The color-changing object (100) of claim 8, wherein:
(a) the first set of charged pigment particles is black and the second set of charged pigment particles is white;
(b) the first set of charged pigment particles is red, the second set of charged pigment particles is green, and the third set of charged pigment particles is blue;
(c) the first set of charged pigment particles is white, the second set of charged pigment particles is cyan, the third set of charged pigment particles is yellow, and the fourth set of charged pigment particles is magenta; or
(d) the first set of charged pigment particles is black, the second set of charged pigment particles is red, the third set of charged pigment particles is yellow, and the fourth set of charged pigment particles is blue.

10. A method of making a color-changing object (100) according to any one of the
preceding claims, the method comprising:
providing (310) a light-transmissive non-planar substrate (120), wherein an outside surface of the substrate (120) is a viewing surface of the color-changing object (100);
disposing (320) a light-transmissive conductive material (130) adjacent the inside surface of the light-transmissive non-planar substrate (120), thereby making the outside surface of the light-transmissive non-planar substrate (120) the viewing surface;
disposing (330) a layer of encapsulated electrophoretic media (140) adjacent the light-transmissive conductive material (130); and
disposing (340) a back conductor (150) adjacent the layer of encapsulated electrophoretic media (140);
**characterized in that** disposing said layer of encapsulated electrophoretic media comprises spray coating, and a liquid being sprayed in the step of spray coating does not use rheology modifiers.

11. The method of claim 10, further comprising:
providing a voltage source; and
coupling the light-transmissive conductive material (130) and the back conductor (150) to the voltage source.

12. The method of claim 10, wherein the light-transmissive non-planar substrate (120) is thermoformed, cast, injection molded, or blow-molded.

13. The method of claim 10, wherein disposing light-transmissive conductive material (130) comprises spray coating, sputtering, atomic layer deposition, vapor deposition, or dip coating.

14. The method of claim 10, further comprising:
masking a portion of the light-transmissive conductive material;
removing the mask after disposing encapsulated electrophoretic media; and
connecting the light-transmissive conductive material to a voltage source.

## Patentansprüche

1. Farbwechselnder Gegenstand (100) umfassend:
ein lichtdurchlässiges nichtplanares Substrat (120), wobei eine Außenfläche des Substrats (120) eine Betrachtungsfläche des farbwechselnden Gegenstands (100) ist;
einen lichtdurchlässigen vorderseitigen Leiter (130), der angrenzend an eine Innenfläche des lichtdurchlässigen nichtplanaren Substrats (120) angeordnet oder in das lichtdurchlässige nichtplanare Substrat (120) integriert ist;
eine Schicht von verkapseltem elektrophoretischem Medium (140); und
einen rückseitigen Leiter (150);
**dadurch gekennzeichnet, dass** die Schicht von verkapseltem elektrophoretischem Medium frei von Rheologiemodifikatoren ist.

2. Farbwechselnder Gegenstand (100) nach Anspruch 1, wobei der rückseitige Leiter (150) lichtdurchlässig ist.

3. Farbwechselnder Gegenstand (100) nach Anspruch 1, ferner umfassend wenigstens eines von einer Klebstoffschicht und einem rückseitigen Substrat.

4. Farbwechselnder Gegenstand (100) nach Anspruch 1, wobei das lichtdurchlässige nichtplanare Substrat (120) Polyethylenterephthalat (PET), Polycarbonat, Polypropylen, Acryl oder Cyclisches-Olefin-Copolymer (COC) umfasst.

5. Farbwechselnder Gegenstand (100) nach Anspruch 1, wobei der lichtdurchlässige vorderseitige Leiter (130) Metallflocken, Metallschirm, leitfähige Polymere, Kohlenstoffnanoröhrchen oder eine Kombination davon umfasst.

6. Farbwechselnder Gegenstand (100) nach Anspruch 1, wobei der lichtdurchlässige vorderseitige Leiter (130) in das lichtdurchlässige nichtplanare Substrat (120) integriert ist.

7. Farbwechselnder Gegenstand (100) nach Anspruch 1, wobei das elektrophoretische Medium (140) geladene Pigmentpartikel in einem Lösungsmittel dispergiert umfasst.

8. Farbwechselnder Gegenstand (100) nach Anspruch 7, wobei die geladenen Pigmentpartikel enthalten (a) zwei Sätze von Pigmentpartikeln mit entgegengesetzten Ladungen;
(b) drei Sätze von Pigmentpartikeln; oder
(c) vier Sätze von Pigmentpartikeln.

9. Farbwechselnder Gegenstand (100) nach Anspruch 8, wobei:
(a) der erste Satz von geladenen Pigmentpartikeln schwarz ist und der zweite Satz von geladenen Pigmentpartikeln weiß ist;
(b) der erste Satz von geladenen Pigmentpartikeln rot ist, der zweite Satz von geladenen Pigmentpartikeln grün ist und der dritte Satz von geladenen Pigmentpartikeln blau ist;
(c) der erste Satz von geladenen Pigmentpartikeln weiß ist, der zweite Satz von geladenen Pigmentpartikeln cyan ist, der dritte Satz von geladenen Pigmentpartikeln gelb ist und der vierte Satz von geladenen Pigmentpartikeln magenta ist; oder
(d) der erste Satz von geladenen Pigmentpartikeln schwarz ist, der zweite Satz von geladenen Pigmentpartikeln rot ist, der dritte Satz von geladenen Pigmentpartikeln gelb ist und der vierte Satz von geladenen Pigmentpartikeln blau ist.

10. Verfahren zur Herstellung eines farbwechselnden Gegenstands (100) nach einem der vorstehenden Ansprüche, wobei das Verfahren umfasst:
Bereitstellen (310) eines lichtdurchlässigen nichtplanaren Substrats (120), wobei eine Außenfläche des Substrats (120) eine Betrachtungsfläche des farbwechselnden Gegenstands (100) ist;
Anordnen (320) eines lichtdurchlässigen leitfähigen Materials (130) angrenzend an die Innenfläche des lichtdurchlässigen nichtplanaren Substrats (120),
wodurch die Außenfläche des lichtdurchlässigen nichtplanaren Substrats (120) zu der Betrachtungsfläche gemacht wird;
Anordnen (330) einer Schicht von verkapseltem elektrophoretischem Medium (140) angrenzend an das lichtdurchlässige leitfähige Material (130); und
Anordnen (340) eines rückseitigen Leiters (150) angrenzend an die Schicht von verkapseltem elektrophoretischem Medium (140);
**dadurch gekennzeichnet, dass** Anordnen der Schicht von verkapseltem elektrophoretischem Medium Sprühbeschichten umfasst und eine Flüssigkeit, die bei dem Schritt der Sprühbeschichtung gesprüht wird, keine Rheologiemodifikatoren einsetzt.

11. Verfahren nach Anspruch 10, ferner umfassend:
Bereitstellen einer Spannungsquelle; und
Koppeln des lichtdurchlässigen leitfähigen Materials (130) und des rückseitigen Leiters (150) an die Spannungsquelle.

12. Verfahren nach Anspruch 10, wobei das lichtdurchlässige nichtplanare Substrat (120) thermogeformt, gegossen, spritzgegossen oder blasgeformt wird.

13. Verfahren nach Anspruch 10, wobei Anordnen von lichtdurchlässigem leitfähigem Material (130) Sprühbeschichtung, Sputtern, Atomlagenabscheidung, Gasphasenabscheidung oder Tauchbeschichtung umfasst.

14. Verfahren nach Anspruch 10, ferner umfassend:
Maskieren eines Teils des lichtdurchlässigen leitfähigen Materials;
Entfernen der Maske nach Abscheiden von verkapseltem elektrophoretischem Medium; und
Verbinden des lichtdurchlässigen leitfähigen Materials mit einer Spannungsquelle.

## Revendications

1. Objet changeant de couleur (100) comprenant :
un substrat non plan transmettant la lumière (120), une surface extérieure du substrat (120) étant une surface de visualisation de l'objet changeant de couleur (100) ;
un conducteur avant transmettant la lumière (130), positionné au voisinage d'une surface intérieure du substrat non plan transmettant la lumière (120) ou intégré à l'intérieur du substrat non plan transmettant la lumière (120) ;
une couche de milieu électrophorétique encapsulé (140) ; et
un conducteur arrière (150) ;
**caractérisé en ce que** la couche de milieu électrophorétique encapsulé est exempte de modificateurs de rhéologie.

2. Objet changeant de couleur (100) de la revendication 1, dans lequel le conducteur arrière (150) transmet la lumière.

3. Objet changeant de couleur (100) de la revendication 1, comprenant en outre une couche adhésive et/ou un substrat arrière.

4. Objet changeant de couleur (100) de la revendication 1, dans lequel le substrat non plan transmettant la lumière (120) comprend du téréphtalate de polyéthylène (PET), du polycarbonate, du polypropylène, de l'acrylique, ou un copolymère oléfinique cyclique (COC).

5. Objet changeant de couleur (100) de la revendication 1, dans lequel le conducteur avant transmettant la lumière (130) comprend des paillettes métalliques, un tamis métallique, des polymères conducteurs, des nanotubes de carbone ou une combinaison de ceux-ci.

6. Objet changeant de couleur (100) de la revendication 1, dans lequel le conducteur avant transmettant la lumière (130) est intégré à l'intérieur du substrat non plan transmettant la lumière (120).

7. Objet changeant de couleur (100) de la revendication 1, dans lequel le milieu électrophorétique (140) comprend des particules de pigment chargées dispersées dans un solvant.

8. Objet changeant de couleur (100) de la revendication 7, dans lequel les particules de pigment chargées comportent (a) deux ensembles de particules de pigment avec des charges opposées ;
(b) trois ensembles de particules de pigment ; ou
(c) quatre ensembles de particules de pigment.

9. Objet changeant de couleur (100) de la revendication 8, dans lequel :
(a) le premier ensemble de particules de pigment chargées est noir et le deuxième ensemble de particules de pigment chargées est blanc ;
(b) le premier ensemble de particules de pigment chargées est rouge, le deuxième ensemble de particules de pigment chargées est vert, et le troisième ensemble de particules de pigment chargées est bleu ;
(c) le premier ensemble de particules de pigment chargées est blanc, le deuxième ensemble de particules de pigment chargées est cyan, le troisième ensemble de particules de pigment chargées est jaune, et le quatrième ensemble de particules de pigment chargées est magenta ; ou
(d) le premier ensemble de particules de pigment chargées est noir, le deuxième ensemble de particules de pigment chargées est rouge, le troisième ensemble de particules de pigment chargées est jaune, et le quatrième ensemble de particules de pigment chargées est bleu.

10. Procédé de fabrication d'un objet changeant de couleur (100) selon l'une quelconque des revendications précédentes, le procédé comprenant :
l'obtention (310) d'un substrat non plan transmettant la lumière (120), une surface extérieure du substrat (120) étant une surface de visualisation de l'objet changeant de couleur (100) ;
la mise en place (320) d'un matériau conducteur transmettant la lumière (130) au voisinage de la surface intérieure du substrat non plan transmettant la lumière (120), ce qui permet de faire de la surface extérieure du substrat non plan transmettant la lumière (120) la surface de visualisation ;
la mise en place (330) d'une couche de milieu électrophorétique encapsulé (140) au voisinage du matériau conducteur transmettant la lumière (130) ; et
la mise en place (340) d'un conducteur arrière (150) au voisinage de la couche de milieu électrophorétique encapsulé (140) ;
**caractérisé en ce que** la mise en place de ladite couche de milieu électrophorétique encapsulé comprend un revêtement par pulvérisation, et un liquide pulvérisé à l'étape de revêtement par pulvérisation n'utilise pas de modificateurs de rhéologie.

11. Procédé de la revendication 10, comprenant en outre :
l'obtention d'une source de tension ; et
le couplage du matériau conducteur transmettant la lumière (130) et du conducteur arrière (150) à la source de tension.

12. Procédé de la revendication 10, dans lequel le substrat non plan transmettant la lumière (120) est thermoformé, coulé, moulé par injection, ou moulé par soufflage.

13. Procédé de la revendication 10, dans lequel la mise en place du matériau conducteur transmettant la lumière (130) comprend un revêtement par pulvérisation, une pulvérisation cathodique, un dépôt de couches atomiques, un dépôt en phase vapeur, ou un revêtement par immersion.

14. Procédé de la revendication 10, comprenant en outre :
le masquage d'une partie du matériau conducteur transmettant la lumière ;
le retrait du masque après la mise en place du milieu électrophorétique encapsulé ; et
le branchement du matériau conducteur transmettant la lumière à une source de tension.
